# EUROPÄISCHE PATENTSCHRIFT

(11) **EP 2 676 052 B1**
(45) Veröffentlichungstag und Bekanntmachung des Hinweises auf die Patenterteilung: **24.06.2020**
(21) Anmeldenummer: 12726575.9
(22) Anmeldetag: 17.02.2012
(51) Int. Cl.: F16H 61/12, F16H 61/688, F16H 63/34

(54) **VORRICHTUNG UND VERFAHREN ZUR REGELUNG EINES DOPPELKUPPLUNGSGETRIEBES ZUR ERREICHUNG EINES SICHEREN ZUSTANDS**
DEVICE AND METHOD FOR REGULATING A DOUBLE-CLUTCH TRANSMISSION IN ORDER TO BRING ABOUT A SAFE STATE
PROCÉDÉ ET DISPOSITIF DE RÉGULATION D'UNE BOÎTE DE VITESSES À DOUBLE EMBRAYAGE POUR PARVENIR À UN ÉTAT DE SÉCURITÉ

(30) Priorität: 18.02.2011 DE 102011011756
(43) Veröffentlichungstag der Anmeldung: 25.12.2013
(73) Patentinhaber: Conti Temic Microelectronic GmbH, 90411 Nürnberg (DE)
(72) Erfinder: NÄGELE, Volker, 78141 Schönwald (DE); PECHTOLD, Michael, 90765 Fürth (DE)
(74) Vertreter: Bonn, Roman Klemens
(86) Internationale Anmeldenummer: PCT/DE2012/100038
(87) Internationale Veröffentlichungsnummer: WO 2012/113386

(56) Entgegenhaltungen:
- EP-A1- 1 679 456
- DE-A1- 4 438 714
- DE-A1- 10 138 395
- DE-A1-102006 051 287
- DE-A1-102008 028 902

## Beschreibung

Die Erfindung betrifft eine Vorrichtung und ein Verfahren zur Regelung eines Doppelkupplungsgetriebes nach den Oberbegriffen der unabhängigen Ansprüche.

Es existieren verschiedene Konzepte, ein Steuergerät insbesondere zur Regelung eines Doppelkupplungsgetriebes in einem Kraftfahrzeug einzelsicherfrei bzw. eigensicher zu gestalten. Eine Möglichkeit, die Eigensicherheit eines Steuergerätes zu erreichen, ist die Überwachung im 3-Ebenen Konzept.

Aus der DE 44 38 714 A1 sind ein Verfahren und eine Vorrichtung zur Steuerung einer Antriebseinheit eines Fahrzeuges bekannt. Hierbei weist das Steuergerät zur Leistungssteuerung ein einziges Rechnerelement auf. Das Rechnerelement führt sowohl die Steuerung als auch die Überwachung durch. Betriebssicherheit und Verfügbarkeit werden dabei dadurch sicher gestellt, dass zur Durchführung der Steuerung und der Überwachung wenigstens zwei voneinander unabhängige Ebenen in einem Rechnerelement vorgesehen sind, wobei in einer ersten Ebene die Funktionen zur Leistungssteuerung bestimmt und in einer zweiten Ebene, insbesondere in Zusammenarbeit mit einem Überwachungsmodul, diese Funktionen, und somit die Funktionsfähigkeit des Rechnerelements selbst überwacht werden.

Zusätzlich wird in der DE 44 38 714 A1 eine dritte Ebene beschrieben, die eine Ablaufkontrolle der zweiten Ebene durchführt. Diese Überwachung durch die dritte Ebene steigert die Zuverlässigkeit und Verfügbarkeit des Steuergerätes. Insbesondere wird im Überwachungsmodul die Ablaufkontrolle als Frage-Antwort-Kommunikation zwischen Überwachungsmodul und Rechnerelement ausgeführt.

Die DE 101 38 395 A1 offenbart eine Notbetätigungsvorrichtung und ein Verfahren zur Notbetätigung einer automatisiert steuerbaren Kupplung. Die Notbetätigungsvorrichtung umfasst einen separaten Notenergiespeicher zur Bereitstellung von Hilfsenergie. Es ist vorgesehen, dass die Kupplung mittels eines durch die Hilfsenergie versorgtem Notstellantrieb notbetätigt werden kann.

Die DE 10 2006 051 287 A1 beschreibt eine Aktuatoranordnung für eine Kraftfahrzeugkupplung. Es ist vorgesehen, dass die Aktuatoranordnung eine Sicherheitseinrichtungen aufweist, die mit einem Elektromotor verbunden und dazu ausgelegt ist, im Falle eines Fehlerzustandes den Elektromotor unabhängig von dem Steuergerät mit elektrischer Leistung zu versorgen.

DE 10 2008 028 902 A1 beschreibt eine Antriebseinheit für ein Kraftfahrzeug. Die Antriebseinheit ist dazu eingerichtet, zumindest bei einer Fehlfunktion eine Unterbrechung einer Drehmomentübertragung mittels einer Öffnung einer Hilfskupplung oder einer Herausnahme eines Getriebegangs durchzuführen.

Die DE 44 38 714 A1 beschreibt eine Vorrichtung zur Steuerung der Antriebseinheit eines Fahrzeugs. Die Vorrichtung umfasst ein Rechenelement, dass sowohl zur Steuerung, als auch zur Überwachung vorgesehen ist.

Die EP 1 679 456 A1 offenbart eine Sicherheitsverriegelung für die Parksperre automatischer Getriebe. Die Sicherheitsverriegelung weist einen Rasthebel auf, der bei einer Bestromung eines mit dem Rasthebel wirkenden Elektromagneten eine Neutralstufe der Sicherheitsverriegelung hält.

Das 3-Ebenen Überwachungskonzept (EGAS-Konzept) setzt sich bei Steuergeräten von Fahrzeugen zur Überwachung elektronischer Systeme immer mehr durch. Dabei besteht das Steuergerät aus dem sog. Funktions- oder Hauptrechner und dem Überwachungseinheit. Funktionsrechner und Überwachungseinheit kommunizieren über ein Frage-Antwort-Verfahren. Darüber hinaus verfügen sie über separate Abschaltpfade für die leistungsbestimmenden Endstufen.

Das EGAS-Konzept wurde ursprünglich für Motorsteuergeräte entwickelt. Dort umfasst die Ebene 1 das eigentliche Funktionsmodul zur Funktionssteuerung der Antriebseinheit des Fahrzeugs. Sie wird daher auch als Funktionsebene bezeichnet. Sie beinhaltet insbesondere Motorsteuerungsfunktionen, u. a. zur Umsetzung der angeforderten Motormomente, Komponentenüberwachungen, die Diagnose der Ein- und Ausgangsgrößen, sowie die Steuerung der Systemreaktionen im erkannten Fehlerfall. Die Ebene 1 wird auf dem Funktionsrechner ausgeführt.

Die Ebene 2, auch als Funktions-Überwachungsebene bezeichnet, umfasst das Sicherheitsmodul und wird ebenfalls auf dem Funktionsrechner ausgeführt. Sie erkennt den fehlerhaften Ablauf überwachungsrelevanter Umfänge des Funktionsmoduls der Ebene 1, u. a. durch die Überwachung der berechneten Momente oder der Fahrzeugbeschleunigung. Im Fehlerfall erfolgt die Auslösung von Systemreaktionen.

Die Ebene 2 wird in einem durch die Ebene 3 abgesicherten Hardwarebereich des Funktionsrechners durchgeführt. Die Ebene 3, auch Rechner-Überwachungsebene genannt, umfasst insbesondere das Überwachungsmodul auf einem unabhängigen Überwachungsrechner mit Befehlssatztest, Programmablaufkontrolle, A/D-Wandler-Test sowie zyklische und vollständige Speichertests der Ebene 2. Das Überwachungsmodul wird auf einem Überwachungsrechner ausgeführt. Der vom Funktionsrechner unabhängige Überwachungsrechner testet durch ein Frage-Antwort-Verfahren die ordnungsgemäße Abarbeitung der Programmbefehle des Funktionsrechners. Im Fehlerfall erfolgt die Auslösung von Systemreaktionen unabhängig vom Funktionsrechner.

Dieses Überwachungskonzept kann sowohl in Motorsteuergeräten als auch in Getriebesteuergeräten, insbesondere für mechanisch eigensichere Systeme, verwendet werden.
Das heißt in einem konkreten Fall für ein Getriebe mit einer Kupplung, die im drucklosen Zustand durch eine mechanische Federkraft geöffnet ist, daß der beabsichtigte Notfallzustand erreicht wird und die Kupplung durch die mechanische Federkraft dauerhaft im geöffneten Zustand gehalten wird, weil die leistungsbestimmenden Endstufen abgeschaltet sind und das hydraulische System zur Betätigung der Kupplung nicht mehr zur Verfügung steht. Es wird somit kein Moment mehr vom Motor zu den Antriebsrädern übertragen.

Es gibt jedoch Getriebetypen, in denen im drucklosen Zustand die Kupplung gegen eine mechanische Federkraft geschlossen ist, so genannte "normally closed" Kupplungen, bei denen dieses Überwachungskonzept in der Form dann nicht angewendet werden kann.

Es stellt sich daher die Aufgabe, eine einfache, kostengünstige und zuverlässige Vorrichtung und ein entsprechendes Verfahren zur Regelung eines mechanisch nicht eigensicheren Systems, insbesondere für ein hydraulisch betätigtes Doppelkupplungsgetriebe zu schaffen.
Erfindungsgemäß wird die Aufgabe gelöst durch eine Vorrichtung und Verfahren mit den Merkmalen der unabhängigen Ansprüche 1 und 5.
Das Doppelkupplungsgetriebe im Antriebsstrang eines Kraftfahrzeugs, umfassend im wesentlichen einen Hauptrechner zur Regelung des Normalbetriebes des Fahrzeugs, der im Notfallbetrieb eine separate Hardwareeinheit ansteuert, eine Überwachungseinheit zur Überwachung des Hauptrechners, eine erste hydraulische Kupplung für ein erstes Teilgetriebe, eine zweite hydraulische Kupplung für ein zweites Teilgetriebe, wobei mindestens eine der hydraulischen Kupplungen im drucklosen Zustand durch Federkraft geschlossen ist, und eine Steuereinheit zur Steuerung eines hydraulischen Kupplungsaktuators zur Betätigung der zumindest einen im drucklosen Zustand durch Federkraft geschlossenen hydraulischen Kupplung.
Im Fehlerfall ist der sichere Zustand eines offenen Antriebsstrangs insbesondere durch die separate Hardwareeinheit herstellbar, indem die separate Hardwareeinheit den Kupplungsaktuator mittels der Steuereinheit ansteuert und dieser die Kupplung öffnet. Der Zustand des offenen Antriebsstrangs ist unter Verwendung einer in der Vorrichtung gespeicherten hydraulischen und elektrischen Restenergie herstellbar, und wobei dieser Zustand bis zur Aufhebung des Notfallbetriebes ohne Aufwendung von zusätzlicher Energie haltbar ist. Der hydraulische Kupplungsaktuator (KAH1, KAH2) ist mittels einer mechanischen Verriegelungsvorrichtung (VVR) bei geöffneter Stellung der zumindest einen im drucklosen Zustand durch Federkraft geschlossenen hydraulischen Kupplung (KH1, KH2) in dieser Stellung haltbar.

Die hydraulische Restenergie ist insbesondere als Restdruck in einem hydraulischen Druckspeicher der Vorrichtung gespeichert, wobei der Druck im hydraulischen Druckspeicher im Normalbetrieb von einer Hydraulikpumpe erzeugt wird.
Der Druck im hydraulischen Druckspeicher ist insbesondere durch einen Drucksensor ermittelbar, und die Hydraulikpumpe ist vorteilhafterweise beim Unterschreiten eines unteren Druckschaltpunktes einschaltbar und beim Überschreiten eines oberen Druckschaltpunktes ausschaltbar.

Insbesondere ist der untere Druckschaltpunkt derart einstellbar, dass im Notfallbetrieb die hydraulische Restenergie ausreicht, um den Kupplungsaktuator zum Öffnen der Kupplung oder den Getriebeaktuator zum Erreichen der Neutralstellung zu betätigen.
Ein Verfahren zur Regelung des hydraulisch betätigten, mechanisch nicht eigensicheren Doppelkupplungsgetriebes umfasst insbesondere folgende Schritte:
- Erkennen eines sicherheitskritischen Zustandes durch den Hauptrechner oder durch die Überwachungseinheit und Auslösen des Notfallbetriebes,
- Senden eines Steuersignals an die Hardwareeinheit durch den Hauptrechner oder durch die Überwachungseinheit,
- Senden eines Steuersignals an die Steuereinheit durch die Hardwareeinheit,
- Senden eines Steuersignals an den hydraulischen Kupplungsaktuator durch die Steuereinheit,
- Öffnen der hydraulischen Kupplung durch den hydraulischen Kupplungsaktuator,
- Halten der offenen Stellung des hydraulischen Kupplungsaktuators bei geöffneter hydraulischer Kupplung mittels einer mechanischen Verriegelungsvorrichtung, wobei der Zustand der offenen Kupplung unter Verwendung einer in der Vorrichtung gespeicherten hydraulischen und elektrischen Restenergie hergestellt wird, und wobei dieser Zustand bis zur Aufhebung des Notfallbetriebes ohne Aufwendung von zusätzlicher Energie gehalten wird.
Ferner stellt sich die Aufgabe, eine einfache, kostengünstige und zuverlässige Vorrichtung und ein entsprechendes Verfahren zur Regelung eines mechanisch nicht eigensicheren Systems, insbesondere für ein elektromechanisch betätigtes Doppelkupplungsgetriebe zu schaffen.
Erfindungsgemäß wird die Aufgabe gelöst durch eine Vorrichtung und Verfahren mit den Merkmalen der unabhängigen Ansprüche 7 und 11.
Hier ist im Fehlerfall der sichere Zustand eines offenen Antriebsstrangs durch die separate Hardwareeinheit herstellbar,
indem die separate Hardwareeinheit den Kupplungsaktuator mittels der Steuereinheit ansteuert und dieser die Kupplung öffnet, wobei der Zustand des offenen Antriebsstrangs unter Verwendung einer in der Vorrichtung gespeicherten elektrischen Restenergie herstellbar

ist, und wobei dieser Zustand bis zur Aufhebung des Notfallbetriebes ohne Aufwendung von zusätzlicher Energie haltbar ist. Der elektromechanische Kupplungsaktuator (KAE1, KAE2) ist mittels einer mechanischen Verriegelungsvorrichtung (VVR) bei geöffneter Stellung der zumindest einen im drucklosen Zustand durch Federkraft geschlossenen elektromechanischen Kupplung (KE1, KE2) in dieser Stellung haltbar.
Ein Verfahren zur Regelung des elektromechanisch betätigten, mechanisch nicht eigensicheren Doppelkupplungsgetriebes umfasst insbesondere folgende Schritte:
- Erkennen eines sicherheitskritischen Zustandes durch den Hauptrechner oder durch die Überwachungseinheit und Auslösen des Notfallbetriebes,
- Senden eines Steuersignals an die Hardwareeinheit durch den Hauptrechner oder durch die Überwachungseinheit,
- Senden eines Steuersignals an die Steuereinheit durch die Hardwareeinheit,
- Senden eines Steuersignals an den elektromechanischen Kupplungsaktuator durch die Steuereinheit,
- Öffnen der elektromechanischen Kupplung durch den elektromechanischen Kupplungsaktuator,
- Halten der offenen Stellung des elektromechanischen Kupplungsaktuators bei geöffneter Kupplung mittels einer mechanischen Verriegelungsvorrichtung, wobei der Zustand der offenen Kupplung unter Verwendung einer in der Vorrichtung gespeicherten elektrischen Restenergie hergestellt wird, und wobei dieser Zustand bis zur Aufhebung des Notfallbetriebes ohne Aufwendung von zusätzlicher Energie gehalten wird.

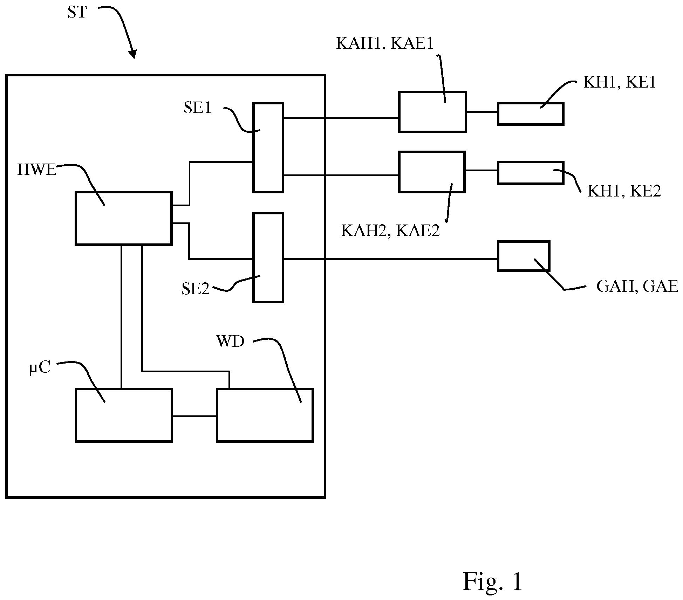

Fig. 1 zeigt eine schematische Darstellung einer Vorrichtung zur Regelung eines mechanisch nicht eigensicheren Doppelkupplungsgetriebes (nicht gezeigt) im Antriebsstrang eines Kraftfahrzeugs, umfassend einen Hauptrechner (µC) zur Regelung des Normalbetriebes des Fahrzeugs, der im Notfallbetrieb eine separate Hardwareeinheit (HWE) ansteuert, eine Überwachungseinheit (WD) zur Überwachung des Hauptrechners (µC), eine erste hydraulisch betätigte Kupplung (KH1) für ein erstes Teilgetriebe, eine zweite hydraulisch betätigte Kupplung (KH2) für ein zweites Teilgetriebe, wobei mindestens eine Kupplung (KH1, KH2) im drucklosen Zustand durch Federkraft geschlossen ist, und eine Steuereinheit (SE1, SE2) zur Steuerung eines hydraulischen Kupplungsaktuators (KAH1, KAH2) zur Betätigung der Kupplung (KH1, KH2) oder zur Steuerung eines hydraulischen Getriebeaktuators (GAH) zu Herstellung der verschiedenen Fahrstufen des Doppelkupplungsgetriebes.

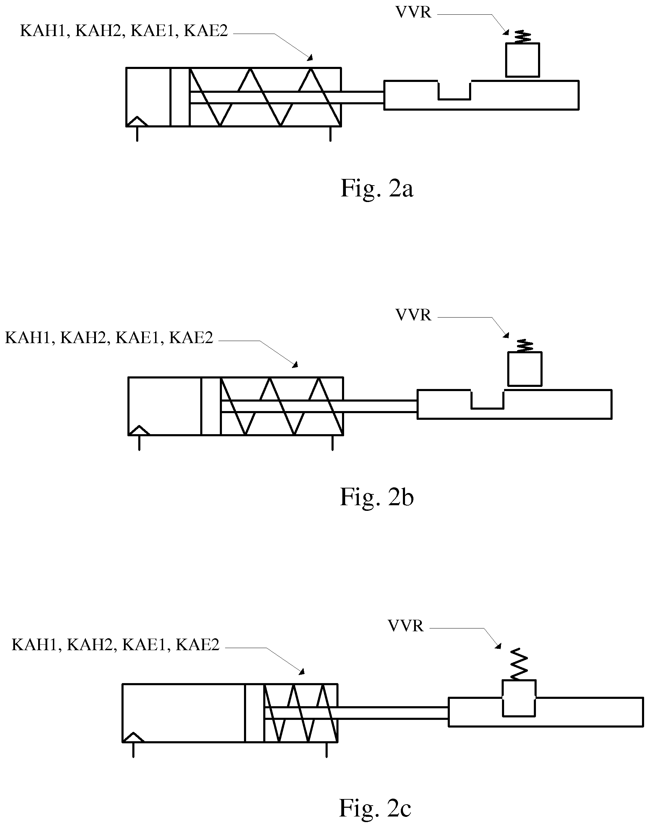

Fig. 2 zeigt eine schematische Darstellung einer Kupplung im geschlossenen, offenen und im offenen und energiefrei fixierten oder auch leistungslos arretierten Zustand. In diesem Fall ist die energiefreie Fixierung der Kupplung im Zustand "offen" durch eine mechanische Verrastung dargestellt. Dieser Zustand könnte auch beispielsweise durch ein geeignetes hydraulisches Sperrventil an Stelle der Verrastung hergestellt werden.

Nach Erreichen der Kupplungsposition "offen" wird die Kupplung energiefrei daran gehindert, die Position "offen" zu verlassen.

Um die Fixierung des sicheren Zustands wieder aufzuheben, muss nach erfolgreicher Verfügbarkeitsüberprüfung des Systems durch den Hauptrechner (µC) die Fixierung durch Aufwenden von Energie wieder gelöst werden.

Dies geschieht beispielsweise durch den folgenden Ablauf bei fixierter offener Kupplung:
- Bewegen des Kupplungsaktuators in Richtung "offen", um die Kupplungsposition wieder aufzunehmen
- Lösen der Fixierung z. B. durch elektromagnetisches Zurückziehen der mechanischen Verriegelung oder Verrastung oder elektrisches Öffnen des hydraulischen Sperrventils.
- Bewegen der Kupplung in die vorgegebene Position der wieder im korrekten Normalbetrieb des Fahrzeugs arbeitenden Steuereinheit..

Zusammenfassend lässt sich sagen, dass die Erfindung folgende Vorteile aufweist:
- Ausnutzen gespeicherter Restenergie von Energiespeichern, die sich im System befinden, wie z.B. Kondensatoren oder Druckspeichern,
- Fixieren des sicheren Zustandes (Kupplung offen) des Getriebes ohne weiteres Aufwenden von Energie, wie z. B. Bestromen von Ventilen oder Pumpenmotoren,
- Wegfall der Notwendigkeit jeglicher aktiv steuernder Systeme zur Erhaltung des sicheren Zustands des Systems wie z.B. Rechnereinheiten, Hydraulikeinheiten, und
- Möglichkeit des Einsatzes von "normally closed" Kupplungen in automatisierten Getrieben

## Patentansprüche

1. Vorrichtung zur Regelung eines hydraulisch betätigten, mechanisch nicht eigensicheren Doppelkupplungsgetriebes im Antriebsstrang eines Kraftfahrzeugs, umfassend
- einen Hauptrechner (µC) zur Regelung des Normalbetriebes des Fahrzeugs, der im Notfallbetrieb eine separate Hardwareeinheit (HWE) ansteuern kann,
- eine Überwachungseinheit (WD) zur Überwachung des Hauptrechners (µC), wobei die Überwachungseinheit (WD) im Notfallbetrieb die separate Hardwareeinheit (HWE) ansteuern kann,
- eine erste hydraulische Kupplung (KH1) für ein erstes Teilgetriebe, eine zweite hydraulische Kupplung (KH2) für ein zweites Teilgetriebe, wobei mindestens eine der hydraulischen Kupplungen (KH1, KH2) im drucklosen Zustand durch Federkraft geschlossen ist,
- eine Steuereinheit (SE1, SE2) zur Steuerung eines hydraulischen Kupplungsaktuators (KAH1, KAH2) zur Betätigung der zumindest einen im drucklosen Zustand durch Federkraft geschlossenen hydraulischen Kupplung (KH1, KH2),
wobei
- im Fehlerfall der sichere Zustand eines offenen Antriebsstrangs durch die separate Hardwareeinheit (HWE) herstellbar ist, indem die separate Hardwareeinheit (HWE) den hydraulischen Kupplungsaktuator (KAH1, KAH2) mittels der ersten Steuereinheit (SE1) ansteuert und dieser die zumindest eine im drucklosen Zustand durch Federkraft geschlossene hydraulische Kupplung (KH1, KH2) öffnet, und
- der Zustand des offenen Antriebsstrangs unter Verwendung einer in der Vorrichtung gespeicherten hydraulischen und/oder elektrischen Restenergie herstellbar ist, und wobei dieser Zustand bis zur Aufhebung des Notfallbetriebes ohne Aufwendung von zusätzlicher Energie haltbar ist,
**dadurch gekennzeichnet, dass**
der hydraulische Kupplungsaktuator (KAH1, KAH2) mittels einer mechanischen Verriegelungsvorrichtung (VVR) bei geöffneter Stellung der zumindest einen im drucklosen Zustand durch Federkraft geschlossenen hydraulischen Kupplung (KH1, KH2) in dieser Stellung haltbar ist.

2. Vorrichtung nach Anspruch 1, **dadurch gekennzeichnet, dass** die hydraulische Restenergie als Restdruck in einem hydraulischen Druckspeicher der Vorrichtung gespeichert ist, wobei der Druck im hydraulischen Druckspeicher im Normalbetrieb von einer Hydraulikpumpe erzeugt wird.

3. Vorrichtung nach Anspruch 2, **dadurch gekennzeichnet, dass** der Druck im hydraulischen Druckspeicher durch einen Drucksensor ermittelbar ist, und die Hydraulikpumpe beim Unterschreiten eines unteren Druckschaltpunktes einschaltbar und beim Überschreiten eines oberen Druckschaltpunktes ausschaltbar ist.

4. Vorrichtung nach Anspruch 3, **dadurch gekennzeichnet, dass** der untere Druckschaltpunkt derart einstellbar ist, dass im Notfallbetrieb die hydraulische Restenergie ausreicht, den hydraulischen Kupplungsaktuator (KAH1, KAH2) zum Öffnen der zumindest einen im drucklosen Zustand durch Federkraft geschlossenen hydraulischen Kupplung (KH1, KH2) zu betätigen.

5. Verfahren zur Regelung eines hydraulisch betätigten, mechanisch nicht eigensicheren Doppelkupplungsgetriebes mit einer Vorrichtung nach Anspruch 1 mit den Schritten:
- Erkennen eines sicherheitskritischen Zustandes durch den Hauptrechner (µC) oder durch die Überwachungseinheit (WD) und Auslösen des Notfallbetriebes durch den Hauptrechner (µC) oder durch die Überwachungseinheit (WD),
- Senden eines Steuersignals an die Hardwareeinheit (HWE) durch den Hauptrechner (µC) oder durch die Überwachungseinheit (WD),
- Senden eines Steuersignals an die erste Steuereinheit (SE1) durch die Hardwareeinheit (HWE),
- Senden eines Steuersignals an den hydraulischen Kupplungsaktuator (KAH1, KAH2) durch die erste Steuereinheit (SE1),
- Öffnen der zumindest einen im drucklosen Zustand durch Federkraft geschlossenen hydraulischen Kupplung (KH1, KH2) durch den hydraulischen Kupplungsaktuator (KAH1, KAH2),
- Halten der offenen Stellung des hydraulischen Kupplungsaktuators (KAH1, KAH2) bei der geöffneten, zumindest einen im drucklosen Zustand durch Federkraft geschlossenen hydraulischen Kupplung (KH1, KH2) mittels einer mechanischen Verriegelungsvorrichtung (VVR), wobei der Zustand der offenen, zumindest einen im drucklosen Zustand durch Federkraft geschlossenen hydraulischen Kupplung (KH1, KH2) unter Verwendung einer in der Vorrichtung gespeicherten hydraulischen und elektrischen Restenergie hergestellt wird, und wobei dieser Zustand bis zur Aufhebung des Notfallbetriebes ohne Aufwendung von zusätzlicher Energie gehalten wird.

6. Steuergerät zur Verwendung in einem Verfahren nach Anspruch 5.

7. Vorrichtung zur Regelung eines elektromechanisch betätigten, mechanisch nicht eigensicheren Doppelkupplungsgetriebes im Antriebsstrang eines Kraftfahrzeugs, umfassend
- einen Hauptrechner (µC) zur Regelung des Normalbetriebes des Fahrzeugs, der im Notfallbetrieb eine separate Hardwareeinheit (HWE) ansteuern kann,
- eine Überwachungseinheit (WD) zur Überwachung des Hauptrechners (µC), wobei die Überwachungseinheit (WD) im Notfallbetrieb die separate Hardwareeinheit (HWE) ansteuern kann,
- eine erste elektromechanische Kupplung (KE1) für ein erstes Teilgetriebe, eine zweite elektromechanische Kupplung (KE2) für ein zweites Teilgetriebe, wobei mindestens eine der elektromechanischen Kupplungen (KE1, KE2) im stromlosen Zustand durch Federkraft geschlossen ist, und
- eine Steuereinheit (SE1, SE2) zur Steuerung eines elektromechanischen Kupplungsaktuators (KAE1, KAE2) zur Betätigung der zumindest einen im stromlosen Zustand durch Federkraft geschlossen elektromechanischen Kupplung (KE1, KE2),
wobei
- im Fehlerfall der sichere Zustand eines offenen Antriebsstrangs durch die separate Hardwareeinheit (HWE) herstellbar ist,indem die separate Hardwareeinheit (HWE) den elektromechanischen Kupplungsaktuator (KAE1, KAE2) mittels der ersten Steuereinheit (SE1) ansteuert und dieser die zumindest einen im stromlosen Zustand durch Federkraft geschlossene elektromechanische Kupplung (KE1, KE2) öffnet, und
- der Zustand des offenen Antriebsstrangs unter Verwendung einer in der Vorrichtung gespeicherten elektrischen Restenergie herstellbar ist, und wobei dieser Zustand bis zur Aufhebung des Notfallbetriebes ohne Aufwendung von zusätzlicher Energie haltbar ist,
**dadurch gekennzeichnet, dass**
der elektromechanische Kupplungsaktuator (KAE1, KAE2) mittels einer mechanischen Verriegelungsvorrichtung (VVR) bei geöffneter Stellung der zumindest einen im stromlosen Zustand durch Federkraft geschlossenen elektromechanischen Kupplung (KE1, KE2) in dieser Stellung haltbar ist..

8. Vorrichtung nach einem der Ansprüche 1 bis 4 und 7, **dadurch gekennzeichnet, dass** die elektrische Restenergie zur Versorgung der Steuereinheit (SE1, SE2) n einem separaten elektrischen Energiespeicher im Fahrzeug oder der Fahrzeugbatterie gespeichert ist.

9. Vorrichtung nach einem der Ansprüche 1 bis 4 und 7 bis 8, **dadurch gekennzeichnet, dass** der Hauptrechner (µC), die Überwachungseinheit (WD), die separate Hardwareeinheit (HWE) und die Steuereinheit (SE1, SE2) auf einem gemeinsamen Schaltungsträger (ST) angeordnet sind.

10. Vorrichtung nach einem der vorhergehenden Ansprüche, **dadurch gekennzeichnet, dass** die separate Hardwareeinheit (HWE) als eine diskret aufgebaute Elektronik zur Realisierung einer einfachen Ablaufsteuerung im Notfallbetrieb ausgeführt ist oder als ein weiterer Rechner zur Realisierung einer programmierten Ablaufsteuerung im Notfallbetrieb ausgeführt ist.

11. Verfahren zur Regelung eines elektromechanisch betätigten, mechanisch nicht eigensicheren Doppelkupplungsgetriebes mit einer Vorrichtung nach Anspruch 7 mit den Schritten:
- Erkennen eines sicherheitskritischen Zustandes durch den Hauptrechner (µC) oder durch die Überwachungseinheit (WD) und Auslösen des Notfallbetriebes durch den Hauptrechner (µC) oder durch die Überwachungseinheit (WD),
- Senden eines Steuersignals an die Hardwareeinheit (HWE) durch den Hauptrechner (µC) oder durch die Überwachungseinheit (WD),
- Senden eines Steuersignals an die erste Steuereinheit (SE1) durch die Hardwareeinheit (HWE),
- Senden eines Steuersignals an den elektromechanischen Kupplungsaktuator (KAE1, KAE2) durch die erste Steuereinheit (SE1),
- Öffnen der zumindeste einen im stromlosen Zustand durch Federkraft geschlossenen elektromechanischen Kupplung (KE1, KE2) durch den elektromechanischen Kupplungsaktuator (KAE1, KAE2),
- Halten der offenen Stellung des elektromechanischen Kupplungsaktuators (KAE1, KAE2) bei der geöffneten, zumindest einen im stromlosen Zustand durch Federkraft geschlossenen elektromechanischen Kupplung (KE1, KE2) mittels einer mechanischen Verriegelungsvorrichtung, wobei der Zustand der offenen elektromechanischen Kupplung (KE1, KE2) unter Verwendung einer in der Vorrichtung (VVR) gespeicherten elektrischen Restenergie hergestellt wird, und wobei dieser Zustand bis zur Aufhebung des Notfallbetriebes ohne Aufwendung von zusätzlicher Energie gehalten wird.

12. Steuergerät zur Verwendung in einem Verfahren nach Anspruch 11.

## Claims

1. Device for regulating a hydraulically activated mechanically non-intrinsically safe double clutch transmission in the drive train of a motor vehicle, comprising
- a main computer (µC) for regulating the normal operation of the vehicle, which computer can, in the emergency operating mode, activate a separate hardware unit (HWE),
- a monitoring unit (WD) for monitoring the main computer (µC), wherein in the emergency operating mode the monitoring unit (WD) can actuate the separate hardware unit (HWE),
- a first hydraulic clutch (KH1) for a first component transmission, a second hydraulic clutch (KH2) for a second component transmission, wherein in the pressureless state at least one of the hydraulic clutches (KH1, KH2) is closed by a spring force,
- a control unit (SE1, SE2) for controlling a hydraulic clutch actuator (KAH1, KAH2) for activating the at least one hydraulic clutch (KH1, KH2) which is closed by spring force in the pressureless state,
wherein
- in the case of a fault the safe state of an open drive train can be brought about by the separate hardware unit (HWE) in that the separate hardware unit (HWE) actuates the hydraulic clutch actuator (KAH1, KAH2) by means of the first control unit (SE1), and the latter opens the at least one hydraulic clutch (KH1, KH2) which is closed by spring force in the pressureless state, and
- the state of the open drive train can be brought about by using hydraulic and/or electrical residual energy stored in the device, and wherein this state can be maintained without applying additional energy, until the emergency operating mode is cancelled,
**characterized in that**
when the at least one hydraulic clutch (KH1, KH2) is closed by spring force in the pressureless state is in the opened position, the hydraulic clutch actuator (KAH1, KAH2) can be held in this position by means of a mechanical locking device (VVR).

2. Device according to Claim 1, **characterized in that** the hydraulic residual energy is stored as residual pressure in a hydraulic pressure accumulator of the device, wherein in the normal operating mode the pressure in the hydraulic pressure accumulator is generated by a hydraulic pump.

3. Device according to Claim 2, **characterized in that** the pressure in the hydraulic pressure accumulator can be determined by a pressure sensor and the hydraulic pump can be switched on when a lower pressure switching point is undershot, and can be switched off when an upper pressure switching point is exceeded.

4. Device according to Claim 3, **characterized in that** the lower pressure switching point can be set in such a way that in the emergency operating mode the hydraulic residual energy is sufficient to activate the hydraulic clutch actuator (KAH1, KAH2) to open the at least one hydraulic clutch (KH1, KH2) which is closed by spring force in the pressureless state.

5. Method for regulating a hydraulically activated, mechanically non-intrinsically safe double clutch transmission having a device according to Claim 1, having the steps:
- detecting a safety-critical state by means of the main computer (µC) or by means of the monitoring unit (WD) and triggering the emergency operating mode by means of the main computer (µC) or by means of the monitoring unit (WD),
- transmitting a control signal to the hardware unit (HWE) by means of the main computer (µC) or by means of the monitoring unit (WD),
- transmitting a control signal to the first control unit (SE1) by means of the hardware unit (HWE),
- transmitting a control signal to the hydraulic clutch actuator (KAH1, KAH2) by means of the first control unit (SE1),
- opening the at least one hydraulic clutch (KH1, KH2) which is closed by spring force in the pressureless state, by means of the hydraulic clutch actuator (KAH1, KAH2),
- when the at least one hydraulic clutch (KH1, KH2) which is closed by spring force in a pressureless state is opened, holding the open position of the hydraulic clutch actuator (KAH1, KAH2) by means of a mechanical locking device (VVR), wherein the state of the open, at least one hydraulic clutch (KH1, KH2) which is closed by spring force in a pressureless state is brought about by using hydraulic and electrical residual energy which is stored in the device, and wherein this state is maintained without applying additional energy until the emergency operating mode is cancelled.

6. Control device for use in a method according to Claim 5.

7. Device for regulating a electromechanically activated mechanically non-intrinsically safe double clutch transmission in the drive train of a motor vehicle, comprising
- a main computer (µC) for regulating the normal operation of the vehicle, which computer can, in the emergency operating mode, activate a separate hardware unit (HWE),
- a monitoring unit (WD) for monitoring the main computer (µC), wherein in the emergency operating mode the monitoring unit (WD) can actuate the separate hardware unit (HWE),
- a first electromechanical clutch (KE1) for a first component transmission, a second electromechanical clutch (KE2) for a second component transmission, wherein in the currentless state at least one of the electromechanical clutches (KE1, KE2) is closed by a spring force,
- a control unit (SE1, SE2) for controlling a electromechanical clutch actuator (KAE1, KAE2) for activating the at least one electromechanical clutch (KE1, KE2) which is closed by spring force in the currentless state,
wherein
- in the case of a fault the safe state of an open drive train can be brought about by the separate hardware unit (HWE) in that the separate hardware unit (HWE) actuates the electromechanical clutch actuator (KAE1, KAE2) by means of the first control unit (SE1), and the latter opens the at least one electromechanical clutch (KE1, KE2) which is closed by spring force in the currentless state, and
- the state of the open drive train can be brought about by using electrical residual energy stored in the device, and wherein this state can be maintained without applying additional energy, until the emergency operating mode is cancelled,
**characterized in that**
when the at least one electromechanical clutch (KE1, KE2) is closed by spring force in the currentless state is in the opened position, the electromechanical clutch actuator (KAE1, KAE2) can be held in this position by means of a mechanical locking device (VVR).

8. Device according to one of Claims 1 to 4 and 7, **characterized in that** the electrical residual energy for supplying the control unit (SE1, SE2) is stored in a separate electrical energy store in the vehicle or the vehicle battery.

9. Device according to one of Claims 1 to 4 and 7 to 8, **characterized in that** the main computer (µC), the monitoring unit (WD), the separate hardware unit (HWE) and the control unit (SE1, SE2) are arranged on a common circuit carrier (ST).

10. Device according to one of the preceding claims, **characterized in that** the separate hardware unit (HWE) is embodied as an electronic unit which is of discrete design and has the purpose of implementing a simple sequence control process in the emergency operating mode or is embodied as a further computer for implementing a programmed sequence control process in the emergency operating mode.

11. Method for regulating an electromechanically activated, mechanically non-intrinsically safe double clutch transmission having a device according to Claim 7 having the steps:
- detecting a safety-critical state by means of the main computer (µC) or by means of the monitoring unit (WD) and triggering the emergency operating mode by means of the main computer (µC) or by means of the monitoring unit (WD),
- transmitting a control signal to the hardware unit (HWE) by means of the main computer (µC) or by means of the monitoring unit (WD),
- transmitting a control signal to the first control unit (SE1) by means of the hardware unit (HWE),
- transmitting a control signal to the electromechanical clutch actuator (KAE1, KAE2) by means of the first control unit (SE1),
- opening the at least one electromechanical clutch (KE1, KE2), which is closed by spring force in the currentless state, by means of the electromechanical clutch actuator (KAE1, KAE2),
- holding the open position of the electromechanical clutch actuator (KAE1, KAE2) when the electromechanical clutch (KE1, KE2) which is closed by spring force in the current state is opened, by means of a mechanical locking device, wherein the state of the open electromechanical clutch (KE1, KE2) is brought about by using electrical residual energy which is stored in the device (VVR), and wherein this state is maintained without applying additional energy until the emergency operating mode is cancelled.

12. Control unit for use in a method according to Claim 11.

## Revendications

1. Dispositif de régulation d'une boîte de vitesses à double embrayage, à actionnement hydraulique sans sécurité intrinsèque mécanique, dans la chaîne cinématique d'un véhicule automobile, comprenant
- un calculateur principal (pC) destiné à réguler le fonctionnement normal du véhicule, qui peut commander une unité matérielle (HWE) séparée en fonctionnement de secours,
- une unité de surveillance (WD) destinée à surveiller le calculateur principal (µC), l'unité de surveillance (WD) pouvant commander l'unité matérielle (HWE) séparée en fonctionnement de secours,
- un premier embrayage hydraulique (KH1) pour une première boîte de vitesses partielle, un deuxième embrayage hydraulique (KH2) pour une deuxième boîte de vitesses partielle, au moins l'un des embrayages hydrauliques (KH1, KH2) étant fermé par la force d'un ressort à l'état hors pression,
- une unité de commande (SE1, SE2) destinée à commander un actionneur d'embrayage hydraulique (KAH1, KAH2) pour actionner l'au moins un embrayage hydraulique (KH1, KH2) fermé par la force d'un ressort à l'état hors pression,
- en cas de défaut, l'état sécurisé d'une chaîne cinématique ouverte pouvant être établi par l'unité matérielle (HWE) séparée en ce que l'unité matérielle (HWE) séparée commande l'actionneur d'embrayage hydraulique (KAH1, KAH2) au moyen de la première unité de commande (SE1) et celui-ci ouvre l'au moins un embrayage hydraulique (KH1, KH2) fermé par la force d'un ressort à l'état hors pression, et
- l'état de la chaîne cinématique ouverte pouvant être établi en utilisant une énergie résiduelle hydraulique et/ou électrique stockée dans le dispositif, et cet état pouvant être maintenu jusqu'à l'annulation du fonctionnement de secours sans utiliser d'énergie supplémentaire,
**caractérisé en ce que**
lorsque l'au moins un embrayage hydraulique (KH1, KH2) fermé par la force d'un ressort à l'état hors pression se trouve dans la position ouverte, l'actionneur d'embrayage hydraulique (KAH1, KAH2) peut être maintenu dans cette position au moyen d'un dispositif de verrouillage (VVR) mécanique.

2. Dispositif selon la revendication 1, **caractérisé en ce que** l'énergie résiduelle hydraulique est stockée en tant que pression résiduelle dans un accumulateur de pression hydraulique du dispositif, la pression dans l'accumulateur de pression hydraulique étant générée par une pompe hydraulique en fonctionnement normal.

3. Dispositif selon la revendication 2, **caractérisé en ce que** la pression dans l'accumulateur de pression hydraulique peut être déterminée par un capteur de pression et la pompe hydraulique peut être mise en marche en cas de franchissement vers le bas d'un point de commutation de pression bas et être arrêtée en cas de franchissement vers le haut d'un point de commutation de pression haut.

4. Dispositif selon la revendication 3, **caractérisé en ce que** le point de commutation de pression bas est réglable de telle sorte qu'en cas de fonctionnement de secours, l'énergie résiduelle hydraulique est suffisante pour actionner l'actionneur d'embrayage hydraulique (KAH1, KAH2) en vue d'ouvrir l'au moins un embrayage hydraulique (KH1, KH2) fermé par la force d'un ressort à l'état hors pression.

5. Procédé de régulation d'une boîte de vitesses à double embrayage, à actionnement hydraulique sans sécurité intrinsèque mécanique, avec un dispositif selon la revendication 1, comprenant les étapes suivantes :
- reconnaissance d'un état critique pour la sécurité par le calculateur principal (µC) ou par l'unité de surveillance (WD) et déclenchement du fonctionnement de secours par le calculateur principal (µC) ou par l'unité de surveillance (WD),
- envoi d'un signal de commande à l'unité matérielle (HWE) par le calculateur principal (µC) ou par l'unité de surveillance (WD),
- envoi d'un signal de commande à la première unité de commande (SE1) par l'unité matérielle (HWE),
- envoi d'un signal de commande à l'actionneur d'embrayage hydraulique (KAH1, KAH2) par l'unité de commande (SE1),
- ouverture, par l'actionneur d'embrayage hydraulique (KAH1, KAH2), de l'au moins un embrayage hydraulique (KH1, KH2) fermé par la force d'un ressort à l'état hors pression,
- maintien de la position ouverte de l'actionneur d'embrayage hydraulique (KAH1, KAH2) lorsque l'au moins un embrayage hydraulique (KH1, KH2) fermé par la force d'un ressort à l'état hors pression est ouvert au moyen d'un dispositif de verrouillage (VVR) mécanique, l'état de l'au moins un embrayage hydraulique (KH1, KH2) fermé par la force d'un ressort à l'état hors pression ouvert étant établi en utilisant une énergie résiduelle hydraulique et électrique stockée dans le dispositif, et cet état étant maintenu jusqu'à l'annulation du fonctionnement de secours sans utiliser d'énergie supplémentaire.

6. Contrôleur destiné à être utilisé dans un procédé selon la revendication 5.

7. Dispositif de régulation d'une boîte de vitesses à double embrayage, à actionnement électromécanique sans sécurité intrinsèque mécanique, dans la chaîne cinématique d'un véhicule automobile, comprenant
- un calculateur principal (µC) destiné à réguler le fonctionnement normal du véhicule, qui peut commander une unité matérielle (HWE) séparée en fonctionnement de secours,
- une unité de surveillance (WD) destinée à surveiller le calculateur principal (µC), l'unité de surveillance (WD) pouvant commander l'unité matérielle (HWE) séparée en fonctionnement de secours,
- un premier embrayage électromécanique (KE1) pour une première boîte de vitesses partielle, un deuxième embrayage électromécanique (KE2) pour une deuxième boîte de vitesses partielle, au moins l'un des embrayages électromécaniques (KE1, KE2) étant fermé par la force d'un ressort à l'état hors tension, et
- une unité de commande (SE1, SE2) destinée à commander un actionneur d'embrayage électromécanique (KAE1, KAE2) pour actionner l'au moins un embrayage électromécanique (KE1, KE2) fermé par la force d'un ressort à l'état hors tension,
- en cas de défaut, l'état sécurisé d'une chaîne cinématique ouverte pouvant être établi par l'unité matérielle (HWE) séparée en ce que l'unité matérielle (HWE) séparée commande l'actionneur d'embrayage électromécanique (KAE1, KAE2) au moyen de la première unité de commande (SE1) et celui-ci ouvre l'au moins un embrayage électromécanique (KE1, KE2) fermé par la force d'un ressort à l'état hors tension, et
- l'état de la chaîne cinématique ouverte pouvant être établi en utilisant une énergie résiduelle électrique stockée dans le dispositif, et cet état pouvant être maintenu jusqu'à l'annulation du fonctionnement de secours sans utiliser d'énergie supplémentaire,
**caractérisé en ce que**
lorsque l'au moins un embrayage électromécanique (KE1, KE2) fermé par la force d'un ressort à l'état hors pression se trouve dans la position ouverte, l'actionneur d'embrayage électromécanique (KAE1, KAE2) peut être maintenu dans cette position au moyen d'un dispositif de verrouillage (VVR) mécanique.

8. Dispositif selon l'une des revendications 1 à 4 et 7, **caractérisé en ce que** l'énergie résiduelle électrique destinée à alimenter l'unité de commande (SE1, SE2) est stockée dans un accumulateur d'énergie électrique séparé dans le véhicule ou dans la batterie du véhicule.

9. Dispositif selon l'une des revendications 1 à 4 et 7 à 8, **caractérisé en ce que** le calculateur principal (µC), l'unité de surveillance (WD), l'unité matérielle (HWE) séparée et l'unité de commande (SE1, SE2) sont disposés sur un porte-circuit (ST) commun.

10. Dispositif selon l'une des revendications précédentes, **caractérisé en ce que** l'unité matérielle (HWE) séparée est réalisée sous la forme d'une électronique à structure discrète destinée à réaliser une commande séquentielle simple en fonctionnement de secours ou sous la forme d'un deuxième calculateur destiné à réaliser une commande séquentielle programmée en fonctionnement de secours.

11. Procédé de régulation d'une boîte de vitesses à double embrayage, à actionnement électromécanique sans sécurité intrinsèque mécanique, avec un dispositif selon la revendication 7, comprenant les étapes suivantes :
- reconnaissance d'un état critique pour la sécurité par le calculateur principal (µC) ou par l'unité de surveillance (WD) et déclenchement du fonctionnement de secours par le calculateur principal (µC) ou par l'unité de surveillance (WD),
- envoi d'un signal de commande à l'unité matérielle (HWE) par le calculateur principal (µC) ou par l'unité de surveillance (WD),
- envoi d'un signal de commande à la première unité de commande (SE1) par l'unité matérielle (HWE),
- envoi d'un signal de commande à l'actionneur d'embrayage électromécanique (KAE1, KAE2) par l'unité de commande (SE1),
- ouverture, par l'actionneur d'embrayage électromécanique (KAE1, KAE2), de l'au moins un embrayage électromécanique (KE1, KE2) fermé par la force d'un ressort à l'état hors pression,
- maintien de la position ouverte de l'actionneur d'embrayage électromécanique (KAE1, KAE2) lorsque l'au moins un embrayage électromécanique (KE1, KE2) fermé par la force d'un ressort à l'état hors pression est ouvert au moyen d'un dispositif de verrouillage mécanique, l'état de l'au moins un embrayage électromécanique (KE1, KE2) fermé par la force d'un ressort à l'état hors pression ouvert étant établi en utilisant une énergie résiduelle électrique stockée dans le dispositif (VVR), et cet état étant maintenu jusqu'à l'annulation du fonctionnement de secours sans utiliser d'énergie supplémentaire.

12. Contrôleur destiné à être utilisé dans un procédé selon la revendication 11.
